# EUROPÄISCHE PATENTSCHRIFT

(11) **EP 1 197 423 B1**
(45) Veröffentlichungstag und Bekanntmachung des Hinweises auf die Patenterteilung: **22.12.2004**
(21) Anmeldenummer: 01124472.0
(22) Anmeldetag: 11.10.2001
(51) Int. Cl.: B62D 65/00

(54) **Hubvorrichtung**
Lifting device
Dispositif de levage

(30) Priorität: 12.10.2000 DE 20017529 U
(43) Veröffentlichungstag der Anmeldung: 17.04.2002
(73) Patentinhaber: Cinetic Conveying & Assembly GmbH, 70806 Kornwestheim (DE)
(72) Erfinder: Linier, Gerhard, 76189 Karlsruhe (DE)
(74) Vertreter: Grünecker, Kinkeldey, Stockmair & Schwanhäusser Anwaltssozietät

(56) Entgegenhaltungen:
- DE-A- 3 150 476
- DE-C- 328 666
- GB-A- 2 030 535
- US-A- 5 437 529

## Beschreibung

Die Erfindung betrifft eine Hubvorrichtung mit den Merkmalen des Oberbegriffs des Patentanspruchs 1.

Bei einer solchen aus der Praxis vorbekannten Hubvorrichtung wird ein Warenträger, der entlang einer Produktionslinie bewegbar ist, in einer Hubstation angeordnet und dort angehoben oder abgesenkt. Der Hubvorrichtung ist eine entsprechende Antriebseinrichtung zum Anheben und Absenken des Warenträgers zugeordnet.

Solche Warenträger werden beispielsweise entlang von Produktionslinien bei der KFZ-Herstellung verwendet. In einem Montagebereich der Produktionslinie wird dabei ein Bauteil oder eine ganze Bauteilgruppe, die vom Warenträger transportiert wird, auf einem anderen Bauteil des Kraftfahrzeugs, wie beispielsweise Karosserieteilkopf oder dergleichen abgelegt und in der abgelegten Stellung werden diese verschiedenen Teile in der Regel automatische miteinander verbunden. Beim Ablegen sollten die verschiedenen, miteinander zu verbindenden Bauteile genau zueinander ausgerichtet sein, damit beispielsweise automatische Schraubvorrichtungen ohne Schwierigkeiten die Verbindung dieser Teile herstellen können.

Es hat sich allerdings herausgestellt, dass das Ablegen der Bauteile mit dem Warenträger nicht stoßfrei erfolgt und dadurch eine gewisse Abweichung in der gegenseitigen Ausrichtung der Teile verursacht werden kann. Um ein solches stoßfreies Ablegen zu ermöglichen, müssten erhebliche Aufwendungen bezüglich Steuerung der Hubvorrichtung geleistet werden, wodurch eine solche Vorrichtung komplexer und teurer würde. Außerdem wird dabei mehr Zeit zum Ablegen und vollständigen Freigeben dieser Bauteile benötigt, so dass der gesamte Arbeitszyklus verlängert wird.

Eine Hubvorrichtung gemäß dem Oberbegriff des Anspruchs 1 ist aus DE3150476A bekannt.

Dem Anmeldungsgegenstand liegt daher die Aufgabe zugrunde, eine Hubvorrichtung der eingangs genannten Art dahingehend zu verbessern, dass in einfacher konstruktiver Weise und ohne größeren Zeitaufwand ein stoßfreies Ablegen erfolgen kann.

Diese Aufgabe wird durch den Gegenstand des Patentanspruchs 1 gelöst.

Durch Drehung der Kurbel mit ihren Kurbelarmen können sich bei einem Ausführungsbeispiel die Aufnahmen je nach Drehung der Drehwelle nach oben oder unten relativ zur Drehwelle bewegen. Dabei werden sie entsprechend durch die sich drehenden Kurbelarme und deren Eingriffselemente nach oben angehoben oder nach unten abgesenkt.

Bei einem anderen Ausführungsbeispiel können bei Drehung der Drehwelle die Kurbelarme im Wesentlichen entlang der Aufnahmen nach oben oder unten "klettern", wodurch bei beiden Ausführungsbeispielen das Anheben oder Absenken des Warenträgers durch eine entsprechende Verbindung zu dem jeweils sich nach oben oder unten bewegenden Teil der Hubvorrichtung erfolgt.

Durch die Verwendung von zwei diametral gegenüberliegenden Kurbelarmen ergibt sich nach einer Drehung von 180 ° der Drehwelle eine Hubgeschwindigkeit von null. In diesem Zusammenhang ist zu beachten, dass die Hub- bzw. Senkgeschwindigkeit entsprechend zur Drehung der Drehwelle mit den Kurbelarmen sinusförmig verläuft und über eine Umdrehung der Drehwelle drei Positionen mit Hub- bzw. Senkgeschwindigkeit gleich null durchläuft. Es sind auch noch mehr Positionen mit einer solchen Geschwindigkeit gleich null möglich, wenn die Drehwelle sich mehr als einmal dreht, oder wenn mehr als zwei Kurbelarme verwendet werden.

Bei dem mittleren Nullwert der Hub- bzw. Senkgeschwindigkeit erfolgt beim Anmeldungsgegenstand das Ablegen des vom Warenträger transportierten Bauteils oder der Bauteile. Dadurch kann das Ablegen ohne Stoß und ohne mögliche Abweichung in der Orientierung der miteinander zu montierenden Bauteile erfolgen.

Um nicht die gesamte Antriebseinrichtung zusammen mit dem Warenträger und von diesem transportierten Bauteilen anheben und absenken zu müssen, können die Aufnahmen einem vertikal beweglichen Tragelement zugeordnet sein und die Antriebseinrichtung kann stationär angeordnet sein, wobei der Warenträger mit dem Tragelement bewegungsverbunden ist. In diesem Fall wird das Tragelement durch die verschiedenen Eingriffe der Eingriffselemente der Kurbelarme in die Aufnahmen je nach Drehung der Drehwelle angehoben bzw. abgesenkt. Die Antriebseinrichtung mit ihrer Drehwelle und weiteren Einrichtungen werden nicht selbst bewegt.

Um in einfacher Weise die Eingriffselemente in die Aufnahmen einführen zu können, sind diese beispielsweise schlitzförmig in einer am Tragelement lösbar befestigten Schlitzleiste ausgebildet. Je nach Erfordernis kann eine Schlitzleiste mit entsprechender Anzahl und Anordnung der Aufnahmeschlitze verwendet werden.

Um die Lebensdauer einer solchen Schlitzleiste trotz andauernder Belastung zu verlängem, kann die Schlitzleiste gehärtet sein.

Um mehr Variationsmöglichkeiten für die Anordnung der Antriebseinrichtung relativ zu den Aufnahmen zu erhalten, kann die Drehwelle als Gelenkwelle ausgebildet sein. Durch die Verwendung einer solchen Gelenkwelle muss diese nicht geradlinig ausgerichtet sein, sondern kann wenigstens einen Knick in horizontaler und/oder vertikaler Richtung aufweisen.

Bei einer stationären Antriebseinrichtung ist deren Lagerung dadurch vereinfacht, dass sie beispielsweise an einem Rahmen oberhalb der Warenträger angeordnet ist.

Zur weiteren Vereinfachung der erfindungsgemäßen Hubvorrichtung kann der Rahmen wenigstens zwei seitliche Vertikalstützen aufweisen, entlang denen die Tragelemente vertikal beweglich sind. Dadurch erfolgt ausgerichtet zu den Vertikalstützen und relativ zum Rahmen die Bewegung der Tragelemente und damit das Anheben und Absenken des Warenträgers.

Bei einem einfachen Ausführungsbeispiel können die Tragelemente als vertikal verlaufende Träger ausgebildet sein, an deren unteren Enden wenigstens ein Querträger angeordnet ist, an dem der Warenträger aufgehängt ist. Dadurch erhält man ein im wesentlichen U-förmiges Gestell, das über die U-Schenkel und deren Verbindung zu den Aufnahmen anheb- oder absenkbar ist.

An dem Querträger kann statt eines Warenträgers auch direkt ein entsprechendes Bauteil befestigt sein, dass durch die erfindungsgemäße Hubvorrichtung anheb- und absenkbar ist.

Befindet sich die erfindungsgemäße Hubvorrichtung entlang einer Einschienenhängebahn mit entsprechenden entlang der Bahn beweglichen Fahrzeugen als Warenträgem, kann ein unterhalb des Querträgers angeordneter Schienenabschnitt der Einschienenhängebahn an diesem Querträger befestigbar sein. Fährt das entsprechende Fahrzeug der Einschienenhängebahn in diesen Schienenabschnitt ein, und ist unterhalb der Einschienenhängebahn ein Bauteil angeordnet, so wird zu diesem ein entsprechendes vom Fahrzeug der Einschienenhängebahn transportiertes Transportbauteil ausgerichtet und der gesamte Schienenabschnitt mit daran befindlichem Fahrzeug und Transportbauteil abgesenkt, bis das Transportbauteil auf dem anderen Bauteil mit einer Geschwindigkeit gleich null abgelegt wird. Anschließend kann der Schienenabschnitt weiter abgesenkt werden, um beispielsweise ein Lösen vom Transportbauteil zu ermöglichen.

Um die Schlitzleiste in einfacher Weise lösbar am Tragelement bzw. Träger befestigen zu können, kann der Träger insbesondere seitlich abstehende Flansche aufweisen, an denen die Schlitzleiste lösbar befestigt ist. Gegebenenfalls kann bei zu starker Abnutzung der Schlitzleiste diese schnell und in einfacher Weise durch eine andere ersetzt werden. Außerdem ist die montierte Schlitzleiste einfach durch eine anders aufgebaute Schlitzleiste ersetzbar.

Die schlitzförmigen Aufnahmen können direkt als Schlitze in der Schlitzleiste ausgebildet sein. Um bei entsprechender Abnutzung auch nur einen Aufnahmeschlitz durch einen anderen ersetzen zu können, kann die Schlitzleiste auf ihrer der Antriebseinrichtung zuweisenden Innenseite lösbar befestigte Schlitzführungen als Aufnahmen aufweisen. Auf diese Weise sind entlang der Schlitzleiste die entsprechenden Schlitzführungen lösbar befestigt und deren Abstand ist in einfacher Weise wählbar. Sollte eine Schlitzführung abgenutzt sein, ist ein Ersetzen dieser einen Schlitzführung ausreichend.

Im einfachsten Fall sind alle Aufnahmeschlitze in vertikaler Richtung gleich beabstandet und/oder mit derselben Schlitzlänge ausgebildet. Dadurch wird sowohl die Herstellung als auch die Anordnung der Aufnahmeschlitze vereinfacht.

Es ist je nach Erfordernis allerdings auch möglich, dass die Schlitzlängen unterschiedlich sind oder dass sich der Abstand der Aufnahmeschlitze ändert.

Um beim Einführen der Eingriffselemente in die Aufnahmeschlitze diese dort relativ sicher zu führen und gleichzeitig ein Auftreten von Reibungen wenigstens zu vermindern, kann das Eingriffselement als im wesentlichen am Ende der Kurbelarme lösbar gelagertes Rollelement ausgebildet sein. Das Rollelement ist beispielsweise scheibenförmig und läuft entlang der Aufnahmeschlitze bei Einführen des Eingriffselements.

Um den Warenträger durch die Hubvorrichtung ohne eine Gefahr der Verkantung oder auch größere Lasten heben zu können, können Drehwellen mit entsprechenden Kurbeln beidseitig zur Antriebseinrichtung angeordnet sein. Die Drehwellen und ihre Kurbeln drehen synchron zueinander, so dass beispielsweise ein vorderes und hinteres Ende des Warenträgers gleichmäßig anhebbar oder absenkbar sind.

Der Aufbau der erfindungsgemäßen Hubvorrichtung wird insgesamt dadurch vereinfacht, wenn im vorangehend genannten Ausführungsbeispiel die Hubvorrichtung symmetrisch zu einer Mittelebene durch die Antriebseinrichtung aufgebaut ist.

Um beim Anheben und Absenken den Warenträger sicher und zielgenau zu führen, kann die Vertikalstütze auf ihrer dem Träger zuweisenden Seite eine Gleitführung aufweisen, entlang der wenigstens ein vom Träger abstehendes Gleitelement geführt ist.

Um die Antriebseinrichtung nicht zu groß und zu aufwendig ausbilden zu müssen, kann es hilfreich sein, wenn insbesondere an oberen Enden der Vertikalstützen eine Umlenkeinrichtung lösbar befestigt ist, über die wenigstens ein den Träger mit einem Gegengewicht verbindendes Zugmittel, wie Seil, Riemen oder dergleichen umgelenkt ist. Durch das Gegengewicht kann beispielsweise das Gewicht der bewegten Massen weitgehend ausgeglichen werden. Die bewegten Massen werden in diesem Zusammenhang durch die Träger, den Querträger, den Schienenabschnitt und zumindest das Fahrzeug der Einschienenhängebahn gebildet. Diese Massen sollen weitgehend ausgeglichen sein. Das Gegengewicht kann darüber hinaus auch 50 % der wechselnden Lasten ausgleichen, d.h. des Gewichts der am Fahrzeug befindlichen Bauteile.

Es sei angemerkt, dass das Gegengewicht in der Regel auf zwei gleich große Einzelgewichte aufgeteilt ist, die jeweils einer Vertikalstütze bzw. einem Träger zugeordnet sind.

Um die Antriebseinrichtung und die Vertikalstützen einfach entlang der Produktionslinie einbauen zu können, kann der Rahmen der Hubvorrichtung wenigstens zwei Längsträger und drei zwischen diesen angeordnete Querträger aufweisen, wobei auf zwei äußeren Querträgern die Vertikalstützen und auf einem mittleren Querträger die Antriebseinrichtung im Wesentlichen angeordnet sind.

Ein solcher Rahmen ist ausreichend stabil, um zusammen mit den Vertikalstützen und der Antriebseinrichtung transportiert und an Ort und Stelle eingebaut zu werden.

Um eine Drehung der Drehwellen in einfacher Weise steuern zu können, kann die Antriebseinrichtung wenigstens einen insbesondere frequenzgeregelten Getriebemotor aufweisen. Dieser ist auf dem mittleren Querträger lösbar befestigt.

Um die insbesondere als Gelenkwelle ausgeführte Drehwelle zwischen Getriebemotor und Kurbel nochmals abzustützen und zu lagern, kann zwischen mittlerem und äußerem Querträger wenigstens ein Lagerträger vorgesehen sein, auf dem eine Lagereinrichtung für einen Abschnitt der Gelenkwelle angeordnet ist. Dieser Abschnitt kann insbesondere der direkt an seinem Ende mit der Kurbel versehene Wellenabschnitt sein.

Von Vorteil könnte sein, die mittlere Position der Kurbel mit Geschwindigkeit null nicht zwischen den beiden entsprechenden Endpositionen bei einer Umdrehung anzuordnen, sondern beispielsweise diese näher zu einer der Endpositionen bei einer Umdrehung mit ebenfalls Geschwindigkeit null anzuordnen. Dieses kann dadurch erreicht werden, dass die Kurbelarme unterschiedlich lang sind. Bei gleichlangen Kurbelarmen ist die Position mit Geschwindigkeit null genau in der Mittel einer Umdrehung, d.h. bei einer Umdrehung von 180 ° angeordnet. Ist jetzt ein Kurbelarm kürzer, verschiebt sich diese Position in Richtung des kürzeren Kurbelarms, d.h. es erfolgt zuerst ein größerer Hubweg mit dem längeren Kurbelarm bis zur Drehposition 180° und anschließend ein kürzerer Hubweg mit dem kürzeren Kurbelarm bis zur Drehposition 360°.

Um gegebenenfalls noch mehr Variationsmöglichkeiten zur Anordnung dieser mittleren Position mit Geschwindigkeit null entlang des Hubweges zu erhalten, kann die Länge des Kurbelarms variabel sein. Dies kann beispielsweise dadurch erfolgen, dass ein Kurbelarm verkürzt und der andere Kurbelarm entsprechend verlängert wird oder umgekehrt.

Um im Falle eines Defekts des Motors der Antriebseinrichtung die erfindungsgemäße Hubvorrichtung weiter nutzen zu können, kann die Antriebseinrichtung zwei Getriebemotore aufweisen, die im Wesentlichen symmetrisch zu einer mittleren Querebene der Antriebseinrichtung auf dem mittleren Querträger angeordnet sind. Durch einfaches Umstecken der Gelenkwellen zwischen den Getriebemotoren, kann dann ein gegebenenfalls beschädigter Getriebemotor ausgetauscht oder repariert werden, während durch den anderen Getriebemotor die Hubvorrichtung weiterhin betrieben wird.

Sollten die beiden Getriebemotoren nicht symmetrisch zur mittleren Querebene angeordnet sein oder auch zur Anpassung an unterschiedliche Gegebenheiten bei verschiedenen Ausführungen der Hubvorrichtung, kann die Gelenkwelle in ihrer Länge veränderlich sein. Dies kann einerseits durch Einbau eines entsprechenden weiteren Wellenabschnitts oder durch Ausbildung eines Wellenabschnitts als teleskopierbare Welle folgen.

Im Folgenden werden vorteilhafte Ausführungsbeispiele der Erfindung anhand einer Zeichnung beigefügten Figuren näher erläutert.

Es zeigen:
- Fig. 1: eine Seitenansicht einer erfindungsgemäßen Hubvorrichtung mit teilweise dargestellter Einschienenhängebahn;
- Fig. 2: ein Schnitt entlang der Linie II-II aus Fig. 1;
- Fig. 3: eine Draufsicht entsprechend zu Fig. 2 auf ein weiteres Ausführungsbeispiel ohne Rahmen;
- Fig. 4: eine Vorderansicht des Ausführungsbeispiels nach Fig. 3;
- Fig. 5: eine Ansicht aus Richtung V-V aus Fig. 1 auf unterschiedliche Phasen eines Anhebens oder Absenkens;
- Fig. 6: ein Diagramm zur Darstellung des Anhebens bzw. Absenkens in Abhängigkeit vom Drehwinkel einer Drehwelle; und
- Fig. 7: ein Diagramm zur Darstellung der Geschwindigkeit des Absenkens bzw. Anhebens in Abhängigkeit von dem Drehwinkel einer Drehwelle bzw. vom Weg.

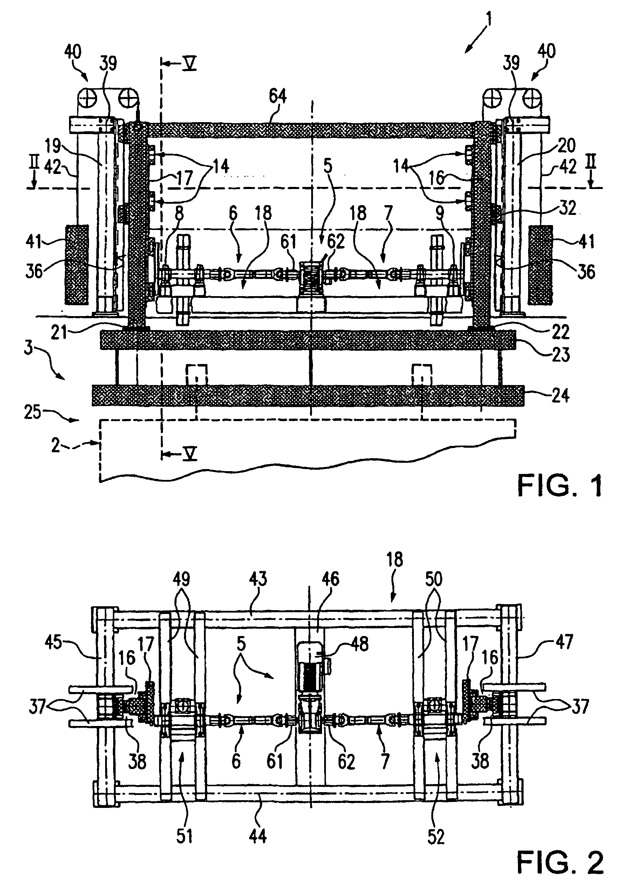

Figur 1 zeigt eine Seitenansicht eines ersten Ausführungsbeispiels einer erfindungsgemäßen Hubvorrichtung 1. Diese ist oberhalb einer Einschienenhängebahn 25 angeordnet. Die Einschienenhängebahn 25 weist ein Fahrzeug als Warenträger 2 auf, das entlang eines in einer Hubstation 3 angeordneten Schienenabschnitts 24 verfahrbar ist.

Der Schienenabschnitt 24 ist von unten an einem Querträger 23 angehängt, der untere Enden 21, 22 von Trägern 16 verbindet. Die Träger bzw. Tragelemente 16 verlaufen im Wesentlichen vertikal und sind an oberen Enden über einen weiteren Querträger 64 miteinander verbunden.

Obere Enden der Träger 16 sind über ein Zugmittel 42 mit einen Gegengewicht 41 verbunden, wobei das Zugmittel über Umlenkeinrichtungen 40 aus zumindest einer Umlenkrolle umgelenkt ist. Die Befestigung der Zugmittel 42 am oberen Ende des Trägers 16 erfolgt bei den einander gegenüberliegenden Trägern auf unterschiedlichen Seiten.

Das Gegengewicht kompensiert im Wesentlichen die bewegten Massen aus Trägern 16, Querträgern 23, 64, Schienenabschnitt 24 und Einschienenhängebahn-Fahrzeug 2.

Die Träger 16 weisen auf ihren voneinander wegweisenden Rückseiten Gleitelemente oder Führungsrollen 38 auf, siehe auch Fig. 2, die entlang vertikal gerichteter Gleitführungen oder Rollenführungen 37 geführt sind. Die Gleitführungen 37 sind auf den den Trägem 16 zuweisenden Innenseiten 36 von Vertikalstützen 19 bzw. 20 angeordnet. An oberen Enden 39 der Vertikalstützen 19, 20 sind die Umlenkeinrichtungen 40 angeordnet.

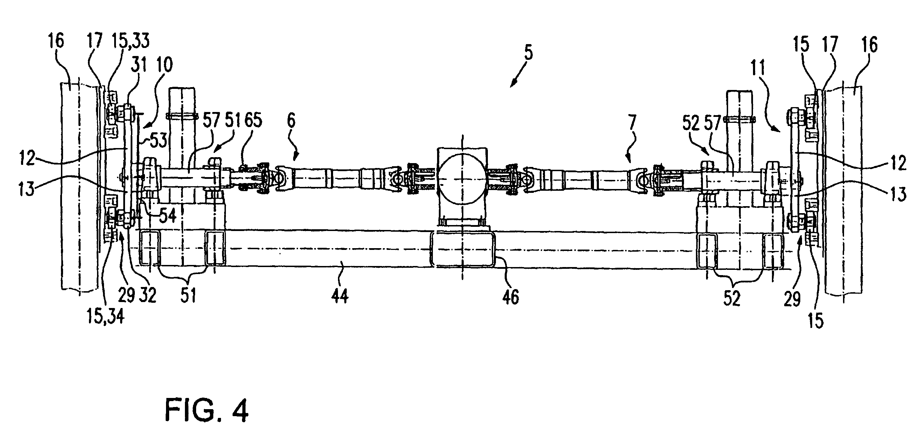

Die Vertikalstützen 19, 20, siehe auch Fig. 2, stehen von einem Rahmen 18 vertikal nach oben ab, wobei an diesem Rahmen ebenfalls eine Antriebseinheit 5 lösbar befestigt ist. Die Antriebseinrichtung 5 weist zumindest einen Getriebemotor 48, 55 auf, der zwei seitlich vorstehende Antriebswellen 61, 62 hat. Mit den Antriebswellen 61, 62 sind Gelenkwellen 6, 7 als Drehwellen verbunden. Diese erstrecken sich seitlich auswärts in Richtung der Träger 16. An freien Enden der Gelenkwellen 8, 9 sind Kurbeln 10, 11 angeordnet, die jeweils zwei radial nach außen verlaufende Kurbelarme 12, 13, siehe auch Fig. 4, aufweisen. Die Kurbelarme weisen im Wesentlichen an ihren Enden Rollelemente 33, 34 als Eingriffselemente 15 auf, siehe nochmals Fig. 4. Diese sind in schlitzförmige Aufnahmen 14 bei Drehung der Gelenkwellen 6, 7 um ihre Achsen einführbar. Die Aufnahmen sind entlang des Trägers 16 beabstandet zueinander angeordnet.

In Fig. 2 ist ein Schnitt entlang der Linie II-II aus Fig. 1 dargestellt, wobei in dieser Figur wie in den folgenden Figuren gleiche Teile mit gleichen Bezugszeichen versehen sind und auf diese nur noch teilweise verwiesen wird.

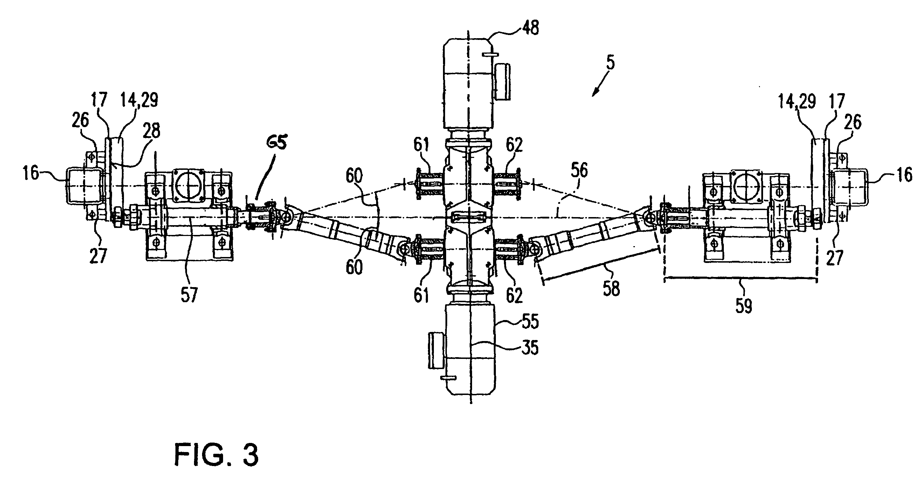

Der Rahmen 18 weist zwei parallel zueinander verlaufende Längsträger 43, 44 auf, zwischen deren Enden sich Querträger 45, 47 und in etwa mittig zu diesen ein Querträger 46 erstreckt. Auf den äußeren Querträgern 45, 47 sind die Vertikalstützen 19, 20 angeordnet. Auf dem mittleren Querträger 46 ist der Getriebemotor 48 der Antriebseinrichtung 5 angeordnet. Senkrecht zu den Querträgern erstrecken sich die Gelenkwellen 6, 7. Zwischen dem mittleren Querträger 46 und den jeweils äußeren Querträgern 45, 47 ist jeweils ein Paar von Lagerträgern 49, 50 vorgesehen, auf denen Lagereinrichtung 51, 52 lösbar befestigt sind. Die Lagereinrichtungen 51, 52 dienen zur Lagerung eines Wellenabschnitts 57, siehe auch Fig. 3.

In Fig. 2 sind die Gleitelemente oder Führungsrollen 38 erkennbar, die entlang der Gleitführungen oder Rollenführungen 37 verschiebbar sind.

Zur Vereinfachung sind außer den Trägem 16 mit Schlitzleisten 17 keine weiteren Teile der bewegten Massen nach Fig. 1 dargestellt.

In Fig. 3 ist eine Draufsicht auf ein weiteres Ausführungsbeispiel einer Antriebseinheit 5 dargestellt. Diese weist zwei Getriebemotore 48, 55 auf, die im Wesentlichen symmetrisch zu einer Querebene 56 der Antriebseinrichtung 5 angeordnet sind.

Der Getriebemotor 48 kann durch einfaches Verschwenken der im zuordbaren Wellenabschnitte um Winkel 60 mit diesen verbunden werden, während der weitere Getriebemotor 55 dann gewartet oder repariert werden kann.

Zur Befestigung der Schlitzleiste 17 stehen seitlich von den Trägern 16 Flansche 26, 27 ab, an denen die Schlitzleisten 17 lösbar befestigt sind. Auf ihren den Trägern 16 gegenüberliegenden Innenseiten 28 sind an den Schlitzleisten 17 Schlitzführungen 29 als Aufnahmen 14 angeordnet. Die Schlitzführungen 29 sind durch zwei voneinander beabstandete Führungsleisten gebildet, siehe auch Fig. 4, zwischen denen die Rollelemente 33, 34 als Eingriffselemente 15 abrollen.

Die Wellenabschnitte 57, an deren freien Enden die Kurbelarme angeordnet sind, sind an Lagereinrichtungen 51, 52 drehbar gelagert, die beispielsweise durch entsprechende Lagerböcke gebildet sein können.

Die Längen 58, 59 der verschiedenen Wellenabschnitte der Gelenkwellen 6, 7 können zumindest für den sich zwischen den Lagereinrichtungen 51, 52 und den Motoren 48, 55 erstreckenden Wellenabschnitt variabel sein.

In Fig. 4 ist eine Vorderansicht der Antriebseinrichtung 5 nach Fig. 3 dargestellt. In dieser Ansicht verlaufen die Gelenkwellen 6, 7 ausgerichtet zueinander in einer Ebene. Die Gelenkwellen sind im Wesentlichen kardanisch miteinander und mit Antriebswellen am entsprechenden Motor der Antriebseinrichtung 5 verbunden.

An den freien Enden 8, 9, siehe auch Fig. 1, der Gelenkwellen 6, 7 sind die Kurbeln 10, 11 mit jeweils Kurbelarmen 12, 13 drehfest angeordnet. Die Kurbelarme 12, 13 sind diametral zueinander relativ zur Welle angeordnet. An ihren Enden 31, 32 sind die Rollelemente 33, 34 als Eingriffselement 15 angeordnet. Die Rollelemente 33, 34 sind über Kugellager drehbar gelagert und sind zwischen parallel angeordneten Leisten der Schlitzführungen 29 geführt. Die Leisten der Schlitzführungen sind lösbar an einer Schlitzleiste 17 befestigt. Die Schlitzleiste 17 kann Teil des Trägers 16 sein oder, wie in Fig. 4 dargestellt, lösbar an diesem befestigt sein. Die Schlitzleiste 17 ist im Wesentlichen aus einem gehärteten Material.

Die Kurbelarme 12, 13 haben unterschiedliche Längen 53, 54, wobei der Kurbelarm 13 kürzer ist. Die entsprechenden Kurbeln an beiden Enden der Gelenkwellen 6, 7 sind gleich ausgerichtet und drehen synchron zueinander.

Die Lagereinrichtungen 51, 52 weisen jeweils zwei voneinander beabstandete Lagerböcke auf, in denen der entsprechende Wellenabschnitt 57 drehbar gelagert ist. Zumindest an einem Ende eines Wellenabschnitts 57 ist insbesondere zum Ausgleich von Fertigungstoleranzen eine Schrumpfscheibe 65 angeordnet. Dadurch ist gewährleistet, dass beide Kurbeln 10, 11 synchron sind.

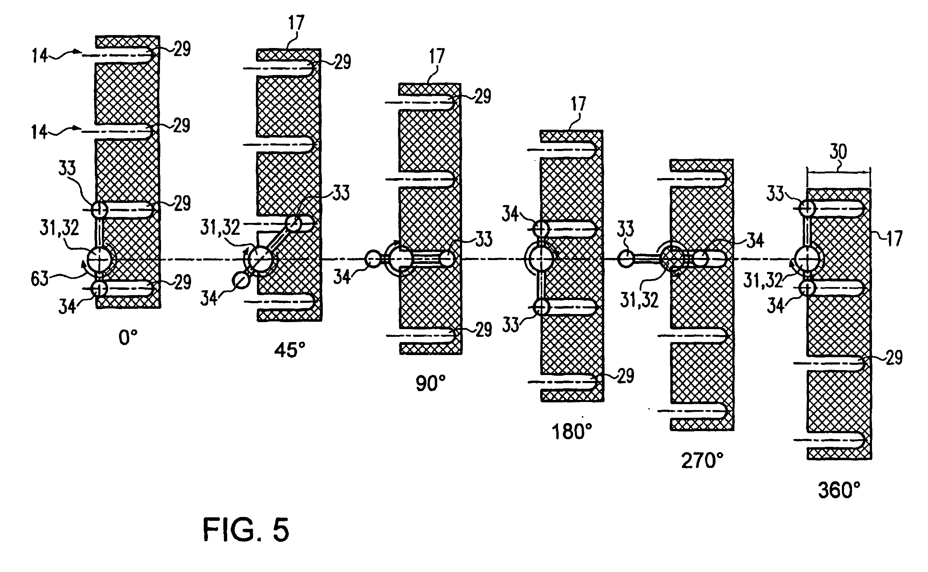

In Fig. 5 sind verschiedene Bewegungsphasen der Schlitzleiste 17 mit Kurbeln 10, 11 bzw. Kurbelarmen 12, 13 für verschiedene Drehpositionen der entsprechenden Gelenkwellen 6, 7 dargestellt. Von links nach rechts in Fig.5 entsprechen die Drehpositionen einer Ausgangsstellung (0 °), einer Drehung von 45 °, einer Drehung von 90 °, einer Drehung von 180 °, einer Drehung von 270 ° und einer vollständigen Drehung von 360 °. In den Drehpositionen 0 °, 180 ° und 360 ° beträgt die Hub- bzw. Senkgeschwindigkeit jeweils 0 m/min.

Bei dem dargestellten Ausführungsbeispiel ist die Antriebseinrichtung 5 stationär, d.h. die Gelenkwellen 6, 7 sind jeweils in gleicher vertikaler Position angeordnet. Durch entsprechende Drehung der Gelenkwellen 6, 7 in Drehrichtungen 63, werden die Kurbelarme 12, 13 mit den an ihren Enden angeordneten Rollelementen 33, 34 in in vertikaler Richtung aufeinander folgende Schlitzführung 29 als Aufnahmen 14 eingeführt. Dadurch wird von links nach rechts in Fig. 5 die Schlitzleiste 17 und der mit dieser verbundene Träger 16, siehe beispielsweise Fig. 1 nach unten abgesenkt. Dies gilt analog für den Querträger 23 an unteren Enden der Träger 16 und den Schienenabschnitt 24 der Einschienenhängebahn 25 mit entsprechendem Warenträger 2.

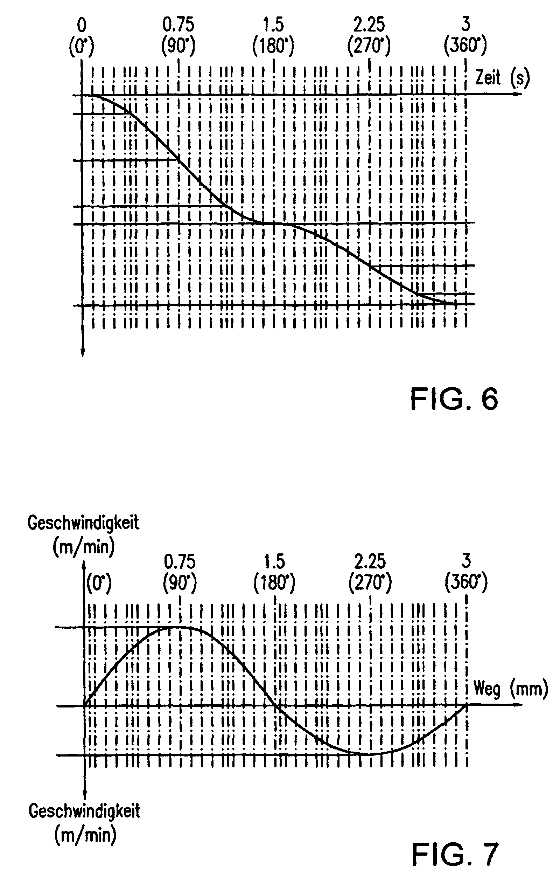

Durch die unterschiedlichen Längen 53, 54, siehe Fig. 4, der Kurbelarme 12, 13 erfolgt eine Absenkung der Schlitzleiste 17 in unterschiendlichem Ausmaße über jeweils eine halbe Drehung der Gelenkwellen 6, 7 um 180 °. Dies ist beispielsweise in Fig. 6 dargestellt, in der auf der Ordinate der Hub und auf der Abszisse der Drehwinkel aufgetragen ist. Neben dem Drehwinkel ist in Fig. 6 noch die Zeit in Sekunden dargestellt, wobei sich aus diesem Diagramm ergibt, dass eine vollständige Umdrehung der Gelenkwellen 6, 7 beispielsweise 3 Sekunden benötigt.

Die Schlitzführungen 29 bzw. Aufnahmeschlitze 14 nach Fig. 5 sind gleich beabstandet in vertikaler Richtung und mit gleicher Länge 30 ausgebildet. In diesem Zusammenhang ist es möglich, dass zumindest die zur Aufnahme der Rollelemente des kürzeren Kurbelarms 13 dienenden Aufnahmeschlitze eine geringere Länge aufweisen.

In Fig. 6 ist insbesondere erkennbar, dass bei einer Drehung von 180 ° der jeweiligen Gelenkwellen 6, 7 für einen kurzen Zeitraum trotz Weiterdrehung der Gelenkwellen kein weiteres Absenken bzw. Anheben der Schlitzleisten 17 erfolgt. Dieser Drehstellung von 180 ° entspricht in dem Diagramm nach Fig. 7 einem Nulldurchlauf der Hub- bzw. Senkgeschwindigkeit.

In dem Diagramm nach Fig. 7 ist die Geschwindigkeit in Abhängigkeit vom Weg bzw. vom Drehwinkel dargestellt. In der in Fig. 7 links dargestellten Halbwelle des sinusförmigen Geschwindigkeitsverlaufs wird die Schlitzleiste 17, siehe auch Fig. 5, von dem längeren Kurbelarm bewegt, während in der zweiten Halbwelle die Bewegung durch den kürzeren Kurbelarm erfolgt. Bei der Bewegung durch den längeren Hebelarm ergibt sich ein höherer Geschwindigkeitsmaximalwert als während der Bewegung durch den kürzeren Kurbelarm. Es ist zu beachten, dass bei beiden Halbwellen die Geschwindigkeiten gleich gerichtet ist, da sowohl bei Bewegung durch den längeren als auch kürzeren Kurbelarm jeweils, siehe Fig. 5, eine Bewegung der Schlitzleiste 17 in vertikaler Richtung nach unten erfolgt.

Durch Variation der Längen der Kurbelarme verändert sich der mit dem jeweiligen Kurbelarm zurückgelegte Weg und ebenfalls der Maximalwert bzw. die entsprechende Halbwelle des Geschwindigkeitsverlaufs nach Fig. 7. Durch den Winkel zwischen den Kurbelarmen ist die Position des mittleren Nulldurchgangs der Geschwindigkeit bestimmt, der bei einem Ausführungsbeispiel mit diametral gegenüberliegenden Kurbelarmen bei 180 ° liegt.

Im folgenden wird kurz die Funktionsweise der erfindungsgemäßen Hubvorrichtung anhand der Figuren beschrieben.

Anfänglich ist die Hubvorrichtung in ihrer oberen Endlage, siehe die Nullgradstellung in Fig. 5. In einer solchen Stellung fährt ein Einschienenhängebahn(EHB)-Fahrzeug auf den Schienenabschnitt 24 nach Fig. 1 auf und wird dort in Fahrtrichtung genau positioniert. Das EHB-Fahrzeug dient als Warenträger, an dem beispielsweise Bauteile oder eine ganze Bodengruppe eines Fahrzeugs hängen. Anschließend wird das EHB-Fahrzeug abgesenkt, wobei das Absenken analog zu Fig. 5 durch Drehen der Gelenkwellen 6, 7 in Drehrichtung 63 erfolgt. In der Drehposition 180 °, d.h. bei dem mittleren Nulldurchgang der Senkgeschwindigkeit, wird das vom EHB-Fahrzeug transportierte Bauteil oder die entsprechende Bodengruppe auf einer Vorrichtung beispielsweise in einem Montagebereich einer Produktionslinie der Kraftfahrzeugfertigung abgelegt. Das Ablegen erfolgt stoßfrei, da die Geschwindigkeit in dieser Drehstellung der Gelenkwellen 6, 7 null beträgt. Nach dem Ablegen beschleunigt sich die Senkbewegung wieder, siehe Fig. 7, bis zur unteren Endlage mit wiederum V=0. Das abgelegte Teil kann dann von automatischen Schraubem oder Schweißrobotem bearbeitet werden. Nach Beendigung dieser Bearbeitungsvorgänge fährt die Hubvorrichtung wieder vertikal nach oben. In der Zwischenposition bei 180 °, siehe Fig. 5, wird wiederum mit V=0 das weiter verarbeitete Bauteil stoßfrei übernommen und danach in die obere Endlage, siehe linke Darstellung in Fig. 5, überführt.

Die Hub- und Senkvorgänge mit der erfindungsgemäßen Hubvorrichtung erfolgen sehr schnell und beispielsweise in maximal drei Sekunden. Beim Ablegen oder Wiederaufnehmen des entsprechenden Karosserieteils ist keine aufwendige Steuerung oder Regelung der Senk- bzw. Hubgeschwindigkeit der Hubvorrichtung notwendig, da durch die Verwendung der Kurbel mit den entsprechenden Kurbelarmen automatisch mit einer Geschwindigkeit V=0 abgelegt bzw. übernommen wird.

Weiterhin ist die erfindungsgemäße Hubvorrichtung sehr genau und nimmt präzise ihre Endlagen ein. Die jeweilige Hub- bzw. Senkgeschwindigkeit verläuft sinusförmig, siehe Fig. 7, und weist drei Nulldurchgänge auf. Durch entsprechende Wahl der Längen 53, 54 der Kurbelarme 12, 13 liegt der mittlere Nulldurchgang der Geschwindigkeit nicht in der Mitte des Gesamthubs, siehe Fig. 6.

Es ist ebenfalls möglich, dass das Anheben und Absenken nicht mit nur einer Umdrehung der entsprechenden Gelenkwellen 6, 7 sondern mit mehreren Umdrehungen erfolgt.

Durch Verwendung einer Frequenzregelung bei der Betätigung der Hubvorrichtung kann der Bewegungsablauf weiter optimiert werden, so dass optimale Taktzeiten und Endhaltepsitionen erreicht werden.

## Patentansprüche

1. Hubvorrichtung zum Anheben und Absenken wenigstens eines Warenträgers (2), welcher in einer Hubstation (3) anordbar und in dieser mittels einer Antriebseinrichtung (5) der Hubvorrichtung anheb- und absenkbar ist, **dadurch gekennzeichnet, dass** die Antriebseinrichtung (5) wenigstens eine Drehwelle (6, 7) mit an ihrem freien Ende (8, 9) angeordneter, zumindest zweiarmiger Kurbel (10, 11) aufweist, von der jeder Kurbelarm (12, 13) ein in vertikal voneinander beabstandet angeordnete Aufnahmen (14) einführbares Eingriffselement (15) aufweist, wobei je nach Drehung der Kurbel (10, 11) die Eingriffselemente (15) mit nach oben oder unten hintereinander angeordneten Aufnahmen (14) in Eingriff bringbar ist.

2. Hubvorrichtung nach Anspruch 1, **dadurch gekennzeichnet, dass** die Aufnahmen (14) einem vertikal beweglichen Tragelement (16) zugeordnet sind und die Antriebseinrichtung (5) stationär angeordnet ist, wobei der Warenträger (2) mit dem Tragelement bewegungsverbunden ist.

3. Hubvorrichtung nach Anspruch 2, **dadurch gekennzeichnet, dass** die Aufnahmen (14) schlitzförmig in einer am Tragelement (16) lösbar befestigten Schlitzleiste (17) ausgebildet sind.

4. Hubvorrichtung nach einem der vorangehenden Ansprüche, **dadurch gekennzeichnet, dass** die Schlitzleiste (17) gehärtet ist.

5. Hubvorrichtung nach einem der vorangehenden Ansprüche, **dadurch gekennzeichnet, dass** die Drehwelle (6, 7) als Gelenkwelle ausgebildet ist.

6. Hubvorrichtung nach einem der vorangehenden Ansprüche, **dadurch gekennzeichnet, dass** die Antriebseinrichtung (5) an einem Rahmen (18) oberhalb des Warenträgers (2) angeordnet ist.

7. Hubvorrichtung nach Anspruch 6, **dadurch gekennzeichnet, dass** der Rahmen (18) wenigstens zwei seitliche Vertikalstützen (19, 20) aufweist, entlang denen Tragelemente (16) vertikal beweglich sind.

8. Hubvorrichtung nach Anspruch 2, **dadurch gekennzeichnet, dass** die Tragelemente (16) als vertikal verlaufende Träger ausgebildet sind, an deren unteren Ende (21, 22) wenigstens ein Querträger (23) angeordnet ist, an dem der Warenträger (2) aufgehängt ist.

9. Hubvorrichtung nach Anspruch 8, **dadurch gekennzeichnet, dass** unterhalb des Querträgers (23) ein Schienenabschnitt (24) eine Einschienenhängebahn angeordnet und an diesem Querträger befestigt ist.

10. Hubvorrichtung nach Anspruch 3, **dadurch gekennzeichnet, dass** das Tragelement (16) insbesondere seitlich abstehende Flansche (26, 27) aufweist, an denen die Schlitzleiste (17) lösbar befestigt ist.

11. Hubvorrichtung nach Anspruch 3, **dadurch gekennzeichnet, dass** die Schlitzleiste (17) auf ihrer der Antriebseinrichtung (5) zuweisenden Innenseite (28) lösbar befestigte Schlitzführungen (29) als Aufnahmen aufweist.

12. Hubvorrichtung nach Anspruch 3, **dadurch gekennzeichnet, dass** die schlitzförmigen Aufnahmen (14) in vertikaler Richtung gleich beabstandet und/oder mit derselben Schlitzlänge (30) ausgebildet sind.

13. Hubvorrichtung nach einem der vorangehenden Ansprüche, **dadurch gekennzeichnet, dass** das Eingriffselement (15) als im Wesentlichen am Ende (31, 32) der Kurbelarme (12, 13) lösbar gelagertes Rollelement (33, 34) ausgebildet ist.

14. Hubvorrichtung nach einem der vorangehenden Ansprüche, **dadurch gekennzeichnet, dass** Drehwellen (6, 7) mit entsprechenden Kurbeln (10, 11) beidseitig zur Antriebseinrichtung (5) angeordnet sind.

15. Hubvorrichtung nach einem der vorangehenden Ansprüche, **dadurch gekennzeichnet, dass** die Hubvorrichtung (1) symmetrisch zu einer Mittelebene (35) quer zur Antriebseinrichtung (5) aufgebaut ist.

16. Hubvorrichtung nach Anspruch 7, **dadurch gekennzeichnet, dass** die Vertikalstütze (19, 20) auf ihrer dem Tragelement (16) zuweisenden Seite (36) eine Gleitführung oder Rollenführung (37) aufweist, entlang der wenigstens ein vom Tragelement (16) abstehendes Gleitelement oder Führungsrolle (38) geführt ist.

17. Hubvorrichtung nach Anspruch 7, **dadurch gekennzeichnet, dass** insbesondere am oberen Ende (39) der Vertikalstütze (19, 20) eine Umlenkeinrichtung (40) lösbar befestigt ist, über die wenigstens ein den Träger (16) mit einem Gegengewicht (41) verbindendes Zugmittel (42) umgelenkt ist.

18. Hubvorrichtung nach Anspruch 6, **dadurch gekennzeichnet, dass** der Rahmen (18) wenigstens zwei Längsträger (43, 44) und drei zwischen diesen angeordnete Querträger (45, 46, 47) aufweist, wobei auf zwei äußeren Querträgern (45, 47) jeweils die Vertikalstützen (19, 20) und auf einem mittleren Querträger (46) die Antriebseinrichtung (5) angeordnet ist.

19. Hubvorrichtung nach einem der vorangehenden Ansprüche, **dadurch gekennzeichnet, dass** die Antriebseinrichtung (5) wenigstens einen insbesondere frequenzgeregelten Getriebemotor (48) aufweist.

20. Hubvorrichtung nach Anspruch 18, **dadurch gekennzeichnet, dass** zwischen mittleren und äußeren Querträgem (46, 45, 47) wenigstens ein Lagerträger (49, 50) vorgesehen ist, auf dem eine Lagereinrichtung (51, 52) für einen Abschnitt (57) der Gelenkwelle (6, 7) angeordnet ist.

21. Hubvorrichtung nach einem der vorangehenden Ansprüche, **dadurch gekennzeichnet, dass** die Kurbelarme (12, 13) unterschiedlich lang sind.

22. Hubvorrichtung nach einem der vorangehenden Ansprüche, **dadurch gekennzeichnet, dass** die Länge (53, 54) eines Kurbelarms (12, 13) variabel ist.

23. Hubvorrichtung nach einem der vorangehenden Ansprüche, **dadurch gekennzeichnet, dass** die Antriebseinrichtung (5) zwei Getriebemotore (48, 55) aufweist, die im Wesentlichen symmetrisch zu einer mittleren Querebene (56) der Antriebseinrichtung auf dem mittleren Querträger (46) angeordnet sind.

24. Hubvorrichtung nach einem der vorangehenden Ansprüche, **dadurch gekennzeichnet, dass** die Gelenkwelle (6, 7) in ihrer Länge (58) veränderlich ist.

25. Hubvorrichtung nach einem der vorangehenden Ansprüche, **dadurch gekennzeichnet, dass** die Kurbelarme (12, 13) relativ zur Drehwelle (6, 7) diametral gegenüberliegen.

## Claims

1. Lifting appliance for raising and lowering at least one product carrier (2) which can be arranged in a lifting station (3) and can be raised and lowered in the latter by means of a drive device (5) of the lifting appliance, **characterized in that** the drive device (5) has at least one rotary shaft (6, 7) with an at least two-armed crank (10, 11) which is arranged at the free end (8, 9) of the said rotary shaft and of which each crank arm (12, 13) has an engagement element (15) capable of being introduced into receptacles (14) arranged so as to be spaced apart vertically from one another, the engagement elements (15) being capable of being brought into engagement, depending on the rotation of the crank (10, 11), with receptacles (14) arranged one behind the other upwardly or downwardly.

2. Lifting appliance according to Claim 1, **characterized in that** the receptacles (14) are assigned to a vertically movable carrying element (16), and the drive device (5) is arranged in a stationary manner, the product carrier (2) being motionally connected to the carrying element.

3. Lifting appliance according to Claim 2, **characterized in that** the receptacles (14) are formed, slot-shaped, in a slotted strip (17) fastened releasably to the carrying element (16).

4. Lifting appliance according to one of the preceding claims, **characterized in that** the slotted strip (17) is hardened.

5. Lifting appliance according to one of the preceding claims, **characterized in that** the rotary shaft (6, 7) is designed as a cardan shaft.

6. Lifting appliance according to one of the preceding claims, **characterized in that** the drive device (5) is arranged above the product carrier (2) on a frame (18).

7. Lifting appliance according to Claim 6, **characterized in that** the frame (18) has at least two lateral vertical supports (19, 20), along which carrying elements (16) are movable vertically.

8. Lifting appliance according to Claim 2, **characterized in that** the carrying elements (16) are designed as vertically running beams, at the lower end (21, 22) of which is arranged at least one crossbeam (23), on which the product carrier (2) is suspended.

9. Lifting appliance according to Claim 8, **characterized in that** a rail section (24) of a monorail trolley conveyor is arranged below the crossbeam (23) and is fastened to this crossbeam.

10. Lifting appliance according to Claim 3, **characterized in that** the carrying element (16) has, in particular, laterally projecting flanges (26, 27), to which the slotted strip (17) is fastened releasably.

11. Lifting appliance according to Claim 3, **characterized in that** the slotted strip (17) has, as receptacles, slotted guides (29) fastened releasably on its inside (28) pointing towards the drive device (5).

12. Lifting appliance according to Claim 3, **characterized in that** the slot-shaped receptacles (14) are designed so as to be spaced apart equally in the vertical direction and/or with the same slot length (30).

13. Lifting appliance according to one of the preceding claims, **characterized in that** the engagement element (15) is designed as a rolling element (33, 34) mounted releasably essentially at the end (31, 32) of the crank arms (12, 13).

14. Lifting appliance according to one of the preceding claims, **characterized in that** rotary shafts (6, 7) with corresponding cranks (10, 11) are arranged on both sides of the drive device (5).

15. Lifting appliance according to one of the preceding claims, **characterized in that** the lifting appliance (1) is constructed symmetrically to a mid-plane (35) transverse to the drive device (5).

16. Lifting appliance according to Claim 7, **characterized in that** the vertical support (19, 20) has, on its side (36) pointing towards the carrying element (16), a sliding guide or roller guide (37), along which at least one sliding element or guide roller (38) projecting from the carrying element (16) is guided.

17. Lifting appliance according to Claim 7, **characterized in that** a deflection device (40) is fastened releasably, in particular, to the upper end (39) of the vertical support (19, 20), at least one traction means (42) which connects the carrying element (16) to a counterweight (41) being deflected via the said deflection device.

18. Lifting appliance according to Claim 6, **characterized in that** the frame (18) has at least two longitudinal beams (43, 44) and three crossbeams (45, 46, 47) arranged between these, in each case the vertical supports (19, 20) being arranged on two outer crossbeams (45, 47) and the drive device (5) being arranged on a middle crossbeam (46).

19. Lifting appliance according to one of the preceding claims, **characterized in that** the drive device (5) has at least one, in particular, frequency-regulated geared motor (48).

20. Lifting appliance according to Claim 18, **characterized in that**, between the middle and the outer crossbeams (46, 45, 47), at least one bearing beam (49, 50) is provided, on which a bearing device (51, 52) for a section (57) of the cardan shaft (6, 7) is arranged.

21. Lifting appliance according to one of the preceding claims, **characterized in that** the crank arms (12, 13) are of different length.

22. Lifting appliance according to one of the preceding claims, **characterized in that** the length (53, 54) of a crank arm (12, 13) is variable.

23. Lifting appliance according to one of the preceding claims, **characterized in that** the drive device (5) has two geared motors (48, 55) arranged on the middle crossbeam (46) essentially symmetrically to a transverse mid-plane (56) of the drive device.

24. Lifting appliance according to one of the preceding claims, **characterized in that** the cardan shaft (6, 7) is variable in its length (58).

25. Lifting appliance according to one of the preceding claims, **characterized in that** the crank arms (12, 13) lie diametrically opposite one another in relation to the rotary shaft (6, 7).

## Revendications

1. Dispositif de levage pour soulever et abaisser au moins un porte-objets (2), lequel peut être disposé dans une station de levage (3) et soulevé et abaissé dans celle-ci au moyen d'un dispositif d'entraînement (5) du dispositif de levage, **caractérisé en ce que** le dispositif d'entraînement (5) présente au moins un arbre de rotation (6, 7) à l'extrémité libre (8, 9) duquel se trouve une manivelle (10, 11) comportant au moins deux bras, dont chaque bras de manivelle (12, 13) présente un élément d'engagement (15) pouvant être inséré dans des logements (14) espacés verticalement les uns des autres, les éléments d'engagement (15) pouvant être engagés dans les logements (14) alignés les uns à la suite des autres vers le haut ou vers le bas en fonction de la rotation de la manivelle (10, 11).

2. Dispositif de levage selon la revendication 1, **caractérisé en ce que** les logements (14) sont couplés à un élément support (16) mobile verticalement et **en ce que** le dispositif d'entraînement (5) est disposé de manière fixe, les mouvements du porte-objets (2) étant associés à ceux de l'élément support.

3. Dispositif de levage selon la revendication 2, **caractérisé en ce que** les logements (14) sont réalisés sous forme d'encoches dans un montant à encoches (17) qui est fixé de manière amovible sur l'élément support (16).

4. Dispositif de levage selon l'une quelconque des revendications précédentes, **caractérisé en ce que** le montant à encoches (17) a été durci.

5. Dispositif de levage selon l'une quelconque des revendications précédentes, **caractérisé en ce que** l'arbre de rotation (6, 7) est réalisé sous forme d'arbre de transmission.

6. Dispositif de levage selon l'une quelconque des revendications précédentes, **caractérisé en ce que** le dispositif d'entraînement (5) est disposé sur. un bâti (18) au-dessus du porte-objets (2).

7. Dispositif de levage selon la revendication 6, **caractérisé en ce que** le bâti (18) présente au moins deux montants verticaux latéraux (19, 20), le long desquels les éléments supports (16) peuvent être déplacés verticalement.

8. Dispositif de levage selon la revendication 2, **caractérisé en ce que** les éléments supports (16) sont réalisés sous forme de supports s'étendant verticalement, à l'extrémité inférieure (21, 22) desquels se trouve au moins une traverse (23) à laquelle le porte-objets (2) est suspendu.

9. Dispositif de levage selon la revendication 8, **caractérisé en ce qu'**un segment de rail (24) d'un monorail suspendu est disposé en dessous de la traverse (23) et est fixé à cette traverse.

10. Dispositif de levage selon la revendication 3, **caractérisé en ce que** l'élément support (16) présente des brides (26, 27) espacées l'une de l'autre en particulier latéralement, auxquelles le montant à encoches (17) est fixé de manière amovible.

11. Dispositif de levage selon la revendication 3, **caractérisé en ce que** le montant à encoches (17) présente, sur sa face interne (28), située en face du dispositif d'entraînement (5), des guidages à encoches (29) fixés de manière amovible en tant que logements.

12. Dispositif de levage selon la revendication 3, **caractérisé en ce que** les logements (14) en forme d'encoche sont équidistants dans le sens vertical et/ou sont réalisés avec la même longueur d'encoche (30).

13. Dispositif de levage selon l'une quelconque des revendications précédentes, **caractérisé en ce que** l'élément d'engagement (15) est réalisé sous forme de galet (33, 34) logé de manière amovible pratiquement à l'extrémité (31, 32) des bras de manivelle (12, 13).

14. Dispositif de levage selon l'une quelconque des revendications précédentes, **caractérisé en ce que** les arbres de rotation (6, 7), avec les manivelles respectives (10, 11), sont disposés de chaque côté du dispositif d'entraînement (5).

15. Dispositif de levage selon l'une quelconque des revendications précédentes, **caractérisé en ce que** le dispositif de levage (1) est réalisé symétriquement à un plan médian (35) perpendiculaire au dispositif d'entraînement (5).

16. Dispositif de levage selon la revendication 7, **caractérisé en ce que** les montants verticaux (19, 20) présentent, sur leur face (36) située en face de l'élément support (16), un coulisseau ou un guidage à galets (37), le long duquel au moins un élément coulissant ou un galet de guidage (38), espacé de l'élément support (16), est guidé.

17. Dispositif de levage selon la revendication 7, **caractérisé en ce qu'**une poulie de renvoi (40) est fixée de manière amovible en particulier au niveau de l'extrémité supérieure (39) des montants verticaux (19, 20), laquelle modifie la direction d'au moins un moyen de traction (42) reliant le support (16) à un contrepoids (41).

18. Dispositif de levage selon la revendication 6, **caractérisé en ce que** le bâti (18) présente au moins deux longerons (43, 44) et trois traverses (45, 46, 47) disposées entre ces derniers, les montants verticaux (19, 20) étant disposés respectivement sur deux traverses externes (45, 47) et le dispositif d'entraînement (5) sur une traverse centrale (46).

19. Dispositif de levage selon l'une quelconque des revendications précédentes, **caractérisé en ce que** le dispositif d'entraînement (5) présente au moins un moto-réducteur (48) en particulier à fréquence réglable.

20. Dispositif de levage selon la revendication 18, **caractérisé en ce qu'**au moins un support de logement (49, 50) est prévu entre les traverses centrale et externes (46, 45, 47), sur lequel est disposé un dispositif de logement (51, 52) pour un segment (57) de l'arbre de transmission (6, 7).

21. Dispositif de levage selon l'une quelconque des revendications précédentes, **caractérisé en ce que** les bras de manivelle (12, 13) sont de longueur différente.

22. Dispositif de levage selon l'une quelconque des revendications précédentes, **caractérisé en ce que** la longueur (53, 54) d'un bras de manivelle (12, 13) est variable.

23. Dispositif de levage selon l'une quelconque des revendications précédentes, **caractérisé en ce que** le dispositif d'entraînement (5) présente deux moto-réducteurs (48, 55) qui sont disposés essentiellement symétriquement à un plan transversal central (56) du dispositif d'entraînement sur la traverse centrale (46).

24. Dispositif de levage selon l'une quelconque des revendications précédentes, **caractérisé en ce que** la longueur (58) de l'arbre de transmission (6, 7) est variable.

25. Dispositif de levage selon l'une quelconque des revendications précédentes, **caractérisé en ce que** les bras de manivelle (12, 13) sont diamétralement opposés par rapport à l'arbre de rotation (6, 7).
